# EUROPEAN PATENT SPECIFICATION

(11) **EP 1 933 640 B1**
(45) Date of publication and mention of the grant of the patent: **05.01.2011**
(21) Application number: 06792420.9
(22) Date of filing: 11.10.2006
(51) Int. Cl.: A23L 1/226, A23L 1/227, A23L 1/39

(54) **ONION FLAVOUR COMPOUNDS AND USE**
VERBINDUNGEN MIT ZWIEBELGESCHMACK UND IHRE VERWENDUNG
COMPOSES SAVEUR OIGNON ET UTILISATION DE CEUX-CI

(30) Priority: 14.10.2005 GB 0520872
(43) Date of publication of application: 25.06.2008
(73) Proprietor: Hofmann, Thomas Frank, 48161 Münster (DE); Dunkel, Andreas, 48161 Münster (DE)
(72) Inventor: HOFMANN, Thomas, Frank, 85375 Neufahrn (DE); DUNKEL, Andreas, 85354 Freising (DE)
(74) Representative: Givaudan Patents
(86) International application number: PCT/EP2006/009838
(87) International publication number: WO 2007/042287

(56) References cited:
- EP-A1- 0 276 317
- WO-A-92/04024
- KR-A- 2005 014 757
- DATABASE WPI Week 197709 Derwent Publications Ltd., London, GB; AN 1977-15546Y XP002430730 & JP 52 007468 A (SHIONO KORYO KK) 20 January 1977 (1977-01-20)

## Description

This invention relates to onion flavour compounds, to the use of onion flavour compounds in consumables, and to flavour compositions and consumables comprising such compounds.

Flavours, apart from displaying the desired flavour notes, should not provide other undesired flavour notes.
The latter include in particular bitter or metallic notes which are generally found undesirable by consumers. For certain applications, additional flavour notes (for example salty, kokumi, sweet or sour) can be of interest, but will limit the application range of a given flavour compound.

In addition to the presence of the desired flavour note and the absence of undesired ones, flavour compounds should preferably have one or more of the following characteristics: they should be inexpensive to produce, and stable during long periods of storage and to processing conditions that may comprise elevated temperatures and humidity, and extremes of pH. Further, the compounds should display the desired onion note over a wide range of pH, in particular pH 3 to pH 8.

The applicant identified O-alkylated sulphur-containing amino acids or peptides according to formula l hereinunder which are able to provide an onion flavour to consumables and fulfil the abovementioned requirements.

The flavour of freshly-cut onions is to a large extent based on a great variety of sulphur compounds. The main contributing sulphur compounds are propanthial-S-oxide and four different classes of thiosulfinates: completely saturated thiosulfinates (e.g. CH₃-S(O)-S-CH₃), mono- or bis-β,γ-unsaturated thiosulfinates (e.g. CH₂-CH-CH₂-S(O)-S-CH₂-CH-CH₂,allicine), mono-α,β-unsaturated thiosulfinates (e.g. CH₃-S(O)-S-CH-CH-CH₃), and mixed α,β- and β,γ- unsaturated thiosulfinates (e.g. CH₂-CH-CH₂-S(O)-S-CH-CH-CH₃) (Block, Angew. Chem. 1992, 104, 1158-1203). 3-Mercapto-2-methylpentan-1-ol is a further intense flavour isolated from raw onions (Widder et al. J. Agric. Food Chem. 2000, 48, 418-423).

These known onion flavour compounds are difficult to isolate or synthesize chemically, and in consequence are usually expensive to produce. C1-C4 aliphatic hydrocarbons with a -S-CH2CH(NH2)COOH residue for use as garlic or onion taste seasonings are described in JP 52/007468.

y-L-Glutamyl-L-cysteine ethyl ester and drugs containing the compound are described in EP 0 276 317. Pharmaceuticals such as L-cysteine methyl ester for the protection against the toxic effects of an electrophilic agent are described in WO 92/04024.

There remains a need for alternative or improved compounds that are easier to form, and that provide an onion flavour to flavour compositions and consumables.

Surprisingly, applicant has found that compounds of formula I are able to provide an onion flavour.

In a first aspect, the invention is therefore directed to the use as a flavour of a compound of formula I, 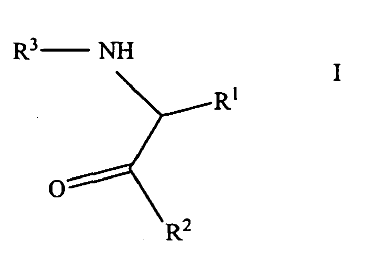 wherein the residues R¹, R² and R³ are selected as follows:
R¹ is a residue selected from the group consisting of - CH₂SX, - CH₂CH₂SX, and -CH₂CH₂CH₂SX, with X being a residue selected from H and -CH₃;
R² is a residue selected from -C₁-C₅ linear or branched alkoxy residue including -O-CH₃, -O-CH₂CH₃, -O-CH₂CH₂CH₃, -O-CH₂CH₂ CH₂CH_{3,}-O-CH₂CH₂ CH₂ CH₂ CH₃,-O-CH(CH₃)CH₃, -O-CH₂CH(CH₃)₂, -0-CH₂CH(CH₃)(CH₂CH₃), and -O-CH₂CH₂CH(CH₃)₂ ; and
R³ is a residue selected from the group of H, and an aminoacid residue linked via a peptide bond selected from the group consisting of γ-Glu (-CO-CH₂-CH₂-CH(NH₂)-COOH), ß-Asp (-CO-CH₂CH(NH₂)-COOH), α-Glu (-CO-CH(NH₂)-CH₂-CH₂-COOH), α-Asp (-CO-CH(NH₂)-CHrCOOH), β-Ala (-CO- CH₂ CH₂-NH₂), α-Ala, α-Val, α-Leu, α-Ile, α-Met, α-Pro, α-Phe, α-Trp, α-Ser, α-Thr, α-Asn, α-Gln, α-Tyr, α-Cys, α-Lys, α-Arg, α-His, α-Asp, a gamma amino butyric acid (GABA), and an uncommon amino acid including 4-hydroxyprolin, ε-N,N,N-trimethyllysine, 3-methylhistindine, 5-hydroxylysine, O-phosphoserine, gamma-carboxyglutamate, ε-N-acetyllysine, ω-N-methylarginine, N-acetylserine, N,N,N-trimethylalanine, N-fomylmethionine.

Standard abbreviations for amino acids are used throughout this text to identify their residues within a larger compound rather than the free amino acid, for example R³ above may be a residue of γ-Glu (-CO-CH₂CH₂-CH(NH₂)-COOH), ß-Asp (-CO-CH₂-CH(NH₂)-COOH), α-Glu (-CO-CH(NH₂)-CH₂-CH₂-COOH), or α-Asp (-CO-CH(NH₂)-CH₂-COOH). An "uncommon" or nonstandard amino acid is a derivative of one of the 20 standard amino acids that occur in biological systems; some occur as components of proteins occurring in nature, some are biologically active peptides.

A compound of formula I may be present in the form as shown or in its ionic form with or without a counter-ion, for example its sodium, potassium, calcium, ammonium, chloride, sulphate, phosphate, carbonate salt, or similar.

In another aspect, the invention is directed to the use as a flavour of a compound of formula I wherein R³ is a residue selected from the group consisting of H, γ-Glu, ß-Asp. α-Glu, α-Asp.

In another aspect, the invention is directed to the use as a flavour of a compound of formula I wherein R³ is a residue selected from the group consisting of a residue of γ-Glu, ß-Asp.

In another aspect, the invention is directed to the use as a flavour of a compound of formula I wherein X is H.

In another aspect, the invention is directed to the use as a flavour of a compound of formula I wherein R¹ is CH₂SH.

In another aspect, the invention is directed to the use as a flavour of a compound of formula I wherein X is CH₃.

In another aspect, the invention is directed to the use as a flavour of a compound of formula I wherein R1 is CH₂CH₂SCH₃.

In another aspect, the invention is directed to the use as a flavour of a compound of formula I wherein R² is a residue selected from -C₁-C₅ linear or branched alkoxy residue selected from the group consisting of-O-CH₃, -O-CH2-CH₃, -O-CH₂CH₂CH₃, -O-CH₂CH₂ CH₂CH₃, -O-CH₂CH₂ CH₂ CH₂ CH₃.-O-CH(CH₃)CH_{3,} -O-CH₂CH(CH₃)₂, -O-CH₂CH(CH₃)(CH₂CH₃), and -O-CH₂CH₂CH(CH₃)₂.

In another aspect, the invention is directed to the use as a flavour of a compound of formula I wherein R² is a residue selected from -C₁-C₄ linear or branched alkoxy residue including -O-CH₃, -O-CH₂CH₃, -O-CH₂CH₂CH₃, -O-CH(CH₃)CH₃, and -O-CH₂CH(CH₃)₂.

In another aspect, the invention is directed to the use as a flavour of a compound of formula I wherein the compound is selected from the group consisting of Cys-O-CH₃, Cys-O-C₂H₅, Cys-O-CH₂CH₂CH₃, Cys-O- CH(CH₃)CH₃, Met-O-CH_{3,} Met-O-C₂H₅, γ-Glu-Cys-Cys-O-CH₃, γ-Glu-Cys-O-C₂H₅.

The table below shows a number of example compounds of formula I:

**Table 1 Example compounds according to Formula 1**

| **Formula I compound** | **R¹** | **R²** | **R³** |
|---|---|---|---|
| Cys-O-CH₃ | CH₂SH | O-CH₃ | H |
| Cys-O-C₂H₅ | CH₂SH | O-CH₂CH₃ | H |
| Cys-O-C₃H₇ | CH₂SH | O-CH₂CH₂CH₃ | H |
| Cys-O-C₃H₇ | CH₂SH | 0- CH(CH₃)CH₃ | H |
| Met-O-CH₃ | CH₂CH₂SCH₃ | O-CH₃ | H |
| Met-O-C₂H₅ | CH₂CH₂SCH₃ | O-CH₂CH₃ | H |
| γ-Glu-Cys-O-CH₃ | CH₂SH | O-CH₃ | COCH₂CH₂CH(NH₂)COOH |
| γ-Glu-Cys-O-C₂H₅ | CH₂SH | O-CH₂CH₃ | COCH₂CH₂CH(NH₂)COOH |

Compounds of formula I display the desired onion note over a wide range of pH.

Some of the compounds of formula l are novel. Therefore, in another aspect, the invention is directed to compounds of formula 1, with the proviso that the compounds are not selected from the group consisting of compounds wherein R¹ =CH₂SH, R² =OCH₃, and R³ = H, Cys or γ-Glu; R¹ =CH₂SH, R² = OCH₂CH₃, and R³ = H, Cys, Ala, Gly or γ-Glu; R¹ =CH₂SH, R² = OCH₂CH₂CH₃, and R³ = H ; R¹ =CH₂SH, R² = OCH₂CH₂CH(CH₃)₂, and R³ = H ; R¹ =CH₂SH, R² = OCH₂CH(CH₃)(CH₂CH3), and R³ = H ; R¹ =CH₂SH, R² OCH₂CH(CH₃)₂, and R³ = H ; R¹ =CH₂SH, R²= OCH(CH₃)CH₃, and R³ = H ; R¹ =CH₂SCH₃, R² = OCH₃, and R³ = H, Gly, Phe, or α-Asp ; R¹ =CH₂SCH₃, R² = OCH₂CH₃, and R³ = H, or Gly ; R¹ =CH₂CH₂SH, R² = OCH₃, and R³ = H; R¹ =CH₂CH₂SH, R² = OCH₂CH₃, and R³ = H; R¹ =CH₂CH₂SH, R² OCH₂CH₂CH₃, and R³ = H; R¹ =CH₂CH₂SH, R² = OCH(CH₃)CH₃, and R³ = H; R¹ =CH₂CH₂SCH₃, R² OCH₃, and R³ = H, Ser, Gly, Phe, Leu, Met, or α-Asp; R¹ =CH₂CH₂SCH₃, R²= OCH₂CH₃, and R³ = H, Met, Phe, or β-Ala; R¹ =CH₂CH₂SCH₃, R² OCH₂CH₂CH₃, and R³ = H; R¹ =CH₂CH₂SCH₃, R² = OCH₂CH(CH₃)₂, and R³ = H; R¹ =CH₂CH₂SCH₃, R² OCH(CH₃)CH₃, and R³ = H; R¹ =CH₂CH₂SCH₃, R²= OCH₂CH₂CH(CH₃)₂, and R³ = H; R¹ =CH₂CH₂CH₂SH, R² = OCH₃. and R³ = H; and R¹ =CH₂CH₂ CH₂SCH₃, R² = OCH₃, and R³ = H.

In another aspect, the invention is directed to flavour compositions for providing an anion taste to foods or beverages comprising one or more compounds of formula I as hereinabove defined, wherein the flavour composition comprises at least one excipient selected from the group consisting of a flavouring agent and a flavour enhancer.

In another aspect, the invention is directed to consumables comprising one or more compounds of formula (1) as hereinabove defined, or mixtures thereof, in a concentration of 1 to 25.000 ppm (weight/weight). A useful concentration is, for example, a concentration from 0.1 - 50 mmol/L, or 0.5 -20 mmol/L, 1-10 mmol/L.

In another aspect, the invention is directed to a method for imparting an onion flavour to a consumable, comprising the addition of a compound as hereinabove described to a consumable in an amount sufficient to impart an onion taste. The compound may be added in form of an unpurified reaction mixture in which it was formed, in form of an extract from a plant or fermentation, in form of a crude extract of the above-mentioned, or in purified form.

In another aspect, the invention is directed to a method for imparting a onion flavour and a kokumi taste to a consumable, comprising the addition of a compound of formula l as defined in claim l wherein R³ = γ-Glu to a consumable.
"Kokumi" is a term used in the flavour industry to describe characteristics such as continuity, mouthfulness, richness and thickness. In contrast thereto, the sensory terms for the basic tastes are salty, sweet, sour, bitter or umami, the latter being the taste of monosodium glutamate (MSG). Kokumi is a distinct taste quality, or rather a taste enhancing quality, which can be easily detected and differentiated with sensory tests by a trained panel. Compounds that provide a kokumi taste are usually tasteless in water, but enhance the taste in combination with other tastants in respect of the above-mentioned qualities.

In methods according to the invention, the compound may be added in the form of an unpurified enzymatic reaction mixture in which it was formed, in the form of a crude extract of such a mixture, or in purified form.

Compounds for use in the present invention may be prepared according to procedures well known in the art.

Certain compounds of formula I can also be prepared enzymatically using gamma-glutamyl-transpeptidase enzyme (GGTP) as is well known in the art using enzymes from various sources including commercial sources and described previously, for example, by Suzuki et al., J. Mol. Catal. 1999, B6, 175-184; Suzuki et al., J. Agric. Food Chem. 2002, 50, 313-318), Suzuki et al.; J. Agric. Food Chem.; 52 (2004); 577-580; Strumeyer and Bloch, Biochem. Prep. 1962, 9, 52-55; Thompson and Meister, Proc. Nat. Acad. Sci. USA, 1975, 72, 1985-1988; Allison and Meister, J. Biol. Chem. 1981, 256, 2988-2992; Meister, The Enzymes B(Academi, New York), 3rd. Ed., Vol. 10, pp. 671-697; Strumeyer and Bloch, J. Biol. Chem.1969, 235, 27; Thompson and Meister, Proc. Nat. Acad. Sci. USA, 1975, 72, 1985-1988; Oppenheimer et al., J. Biol. Chem. 1979, 254, 5184-5190; Tate and Meister, J. Biol. Chem., 1975, 250, 4619-4627.

Starting materials and the enzymes are readily available commercially or can be obtained as described in the references indicated above. Another possibility is the chemical synthesis of peptides from amino acids, which is well known in the art.

The formed products may be purified and used as a flavour in purified form, or they may be used as a flavour in crude form (enzymatic reaction mixture) or as a crude extract from fermentation or from enzymatic reaction with the isolated enzyme.

If so desired, the product may be purified as follows: lyophilisation, followed by chromatographic work-up, for example gel permeation chromatography may be employed. Chromatography may be performed, for example, with Sephadex G-10 (Amersham Bioscience, Uppsalla, Sweden) as stationary and water as mobile phase. The effluent is monitored, for example using an UV-detector at 220 nm. The product eluate can be confirmed by analytical _ methods well known in the art, for example by liquid chromatography and mass spectrometry (LC-MS) and nuclear magnetic resonance (NMR) spectroscopy.

A compound for use in the present invention imparts an onion taste to consumables. The term "consumables" as used herein includes food products, beverages, and compositions for admixture to such products, in particular flavour compositions. Flavour compositions may be added to processed foods or beverages during their processing, or they may actually be consumables in their own right, e.g. condiments such as sauces and the like.

A compound for use in the present invention or a mixture thereof may be used as a flavour ingredient in flavour compositions. A compound or mixture of compounds may be blended with other flavour ingredients in said compositions. A compound or mixture of compounds imparts an onion taste to all kinds of consumables, and is particularly interesting in savoury consumables.

Examples of consumables include cereal products, baker's products, bread products, yeast products, salt and spice products, mustard products, vinegar products, sauces (condiments), soups, processed foods, cooked fruits and vegetable products, meat and meat products, egg products, milk and dairy products, cheese products, butter and butter substitute products, milk substitute products, soy products, edible oils and fat products, medicaments, beverages, alcoholic drinks, beers, soft drinks, food extracts, plant extracts, meat extracts, condiments, sweeteners, nutraceuticals, tablets, lozenges, drops, emulsions, elixirs, syrups and other preparations for making beverages, instant beverages and effervescent tablets.

The flavourant qualities of compounds of the formula (I) may be evident over a broad range of concentrations. For example, in the case of a food or beverage product, a compound or mixture of compounds may be present in a concentration ranging from , for example, 1 to 10.000 ppm, 5 to 25.000 ppm, 10 to 10.000 ppm, 50 to 5000 ppm, and 100 to 1000 ppm (based on weight). The skilled person will appreciate that the appropriate concentration will depend on the consumable, the presence of other flavours, and the desired flavour intensity. The concentration can easily be adjusted by the skilled person to the desired effect.

A person skilled in the art will appreciate that formulations and consumables may contain additional ingredients which may comprise various additives and excipients well known in the art, including anti-caking agents, antifoaming agents, anti-oxidants, binders, colorants, diluents, disintegrants, emulsifiers, encapsulating agents or formulations, enzymes, fats, flavour-enhancers, flavouring agents, gums, lubricants, polysaccharides, preservatives, proteins, solubilisers, solvents, stabilisers, sugar-derivatives, surfactants, sweetening agents, vitamins, waxes, and the like. Solvents which may be used are known to those skilled in the art and include e.g. ethanol, ethylene glycol, propylene glycol, glycerin, triacetin, diethyl phthalate and dimethyl phthalate. Encapsulants and gums include maltodextrin, gum arabic, alginates, gelatin, modified starch, and polysaccharides. Examples of additives, excipients, carriers, diluents or solvents for flavour or fragrance compounds may be found e.g. in "Perfume and Flavor Materials of Natural Origin,. S. Arctander, Ed., Elizabeth, N.J., 1960; in "Perfume and Flavor Chemicals", S. Arctander, Ed., Vol. I & II, Allured Publishing Corporation, Carol Stream, USA, 1994; in "Flavourings", E. Ziegler and H. Ziegler (ed.), Wiley-VCH Weinheim, 1998. and "CTFA Cosmetic Ingredient Handbook", J.M. Nikitakis (ed.), 1st ed., The Cosmetic, Toiletry and Fragrance Association, Inc., Washington, 1988.

There now follows a series of non-limiting examples that serve to illustrate the invention.

### Examples 1- 5

Unless otherwise indicated, all sensory tests are triangle tests and are performed according to the guidelines in "Amtliche Sammlung von Untersuchungsverfahren nach § 35 LMBG (Lebensmittel- und Bedarfsgegenstandegesetz)"; L 00.90 7 , Untersuchung von Lebensmitteln , Sensorische Prüfverfahren. Dreiecksprüfung (Übemahme der gleichnahmigen Deutschen Norm DIN ISO 4120, Ausgabe Januar 1995), as follows:
The sensory panel is trained to evaluate the taste of aqueous solutions (4 ml each) of the following standard taste compounds by using a triangle test as described in the literature (Wieser and Belitz, Z. Lebensm. Unters. Forsch., 1975, 159, 65-72): sucrose (40 mmol/L) for sweet taste; citric acid (5 mmol/L) for sour taste; NaCl (12 mmol/L) for salty taste; caffeine (2 mmol/L) for bitter taste; and monosodium glutamate (MSG; 6 mmol/L) for umami taste. For kokumi taste, a solution of glutathione (10 mmol/L) in diluted chicken broth concentrate (Gourmet Bouillon Huhn, Maggi, Singen, Germany; 3 g/100 g bottled water (Evian®)) is prepared and compared to the taste of chicken broth with no glutathione added. All sensory analyses are performed in a sensory panel room at 22-25 °C over three different sessions by a trained panel of 8 to 10 individuals.
For recording the taste profiles, samples are prepared as indicated in the examples below. Taste profiles of samples are determined in a triangle test in three different sessions. Panellists refrain from eating or drinking for at least 1 hour prior to the session. At the start of the session and before each trial, the subject rinsed with water and expectorated. The participants receive a set of two blanks and one taste sample. Liquid samples are swirled around in the mouth briefly and expectorated. Solid samples are chewed for 20 seconds and then expectorated. After indicating, which glass vial shows a different taste profile and description of the distinction, the participant receives another trial set of two blanks and one taste sample. Each sample with additive is compared to two reference samples without additives.

The sample compounds of formula I with their corresponding residues are listed below:

| **Compounds of formula I** | **R1** | **R2** | **R3** |
|---|---|---|---|
| Cys-O-CH₃ | CH₂SH | OCH₃ | H |
| Cys-O-C₂H₅ | CHO SOH | OC₂H₅ | H |
| Met-O- CH₃ | CH₂CH₂SCH₃ | OCH₃ | H |
| Met-O-C₂H₅ | CH₂ CH₂ S CH₃ | OC₂H₅ | H |
| γ-Glu-Cys-O-C₂H₅ | CH₂SH | OC₂H₅ | γ-Glu |

### Example 1

### Sensory effects of compounds of formula 1 in water

| **Samples** | **Concentration** of **additive** | **Onion flavour intensity** | **Sensory description** |
|---|---|---|---|
| Cys-OH | 5 mmol/L | 0 | sweet |
| Met-OH | 5 mmol/L | 0 | sweet |
| γ-Glu-Cys-OH | 5 mmol/L | 0 | tasteless |
| Ser-O-C₂H₅ | 5 mmol/L | 0 | slightly sweet |
| Ser-O-CH₃ | 5 mmol/L | 0 | slightly sweet |
| γ-Glu-Cys-Gly- O-C₂H₅ | 5 mmol/L | 0 | intensely bitter |
| γ-Glu-Cys(S-C₂H₅)-Gly-OC₂H₅ | 5 mmol/L | 0 | intensely bitter |
| Cys-O-CH₃ | 5 mmol/L | 2,5 | onion flavour |
| Cys-O-C₂H₅ | 5 mmol/L | 3,5 | onion flavour |
| Met-O-CH₃ | 5 mmol/L | 1 | slight onion flavour |
| Met-O-C₂H₅ | 5 mmol/L | 1,5 | slight onion flavour |
| γ-Glu-Cys-O-C₂H₅ | 5 mmol/L | 4,5 | onion flavour |

### Example 2

### Sensory effects of compounds of formula 1 in chicken broth

Sensory tests (triangle test) are performed at least three times for each compound using sensory panels of different individuals to confirm results. Chicken Broth is prepared by dilution of 3 g chicken broth concentrate (Gourmet Bouillon Huhn; Maggi, Singen, Germany) with 100 ml water (Evian). Additives are added as specified in table below.

The pH-value of all samples is adjusted to 6.5 using formic acid (0.1 mol/L) or sodium hydroxide (0.1 mol/L). Flavour intensity (onion or kokumi) is rated from 0-5 according to a scale from 0 to 5 (with 5 most intensive). GSH (5 mmol/L) is determined to have an kokumi intensity of 3 in all tests.
The additive is added to a consumable and the sample is homogenised. The samples are presented to the sensory panel directly after homogenisation.
The results of the tests are indicated in the table below. For each sample, flavour intensity is rated and panelists are asked to describe sensory characteristics.

| **Chicken broth samples** | **concentration of additive** | **onion flavour intensity (0-5)** | **kokumi intensity (0-5)** | **Sensory descriptors** |
|---|---|---|---|---|
| Negative control (without additives) | - | 0 | 2 | - |
| Positive control: NaCl | 30 mmol/L | 0 | 2 | increased salt taste |
| Positive control: MSG (mono sodium glutamate) | 10 mmol/L | 0 | 2 | increased umami taste |
| Cys-OH | 5 mmol/L | 0 | 2 | increased sweetness |
| GSH, reduced form [γ-Glu-Cys-Gly] | 5 mmol/L | 0 | 3 | increased kokumi taste (complexity and mouthfulness, more rich, more impact, punch) |
| γ-Glu-Cys-OH | 5 mmol/L | 0 | 4 | increased kokumi taste (complexity and mouthfulness, more rich, more impact, punch) |
| Cys-O-CH₃ | 5 mmol/L | 2 | 2 | onion flavour |
| Cys-O-C₂H₅ | 5 mmol/L | 3 | 2 | onion flavour |
| Met-O-CH₃ | 5 mmol/L | 0,5 | 2 | slight onion flavour |
| Met-O-C₂H₅ | 5 mmol/L | 1,5 | 2 | slight onion flavour |
| γ-Glu-Cys-OC₂H₅ | 5 mmol/L | 4 | 3,5 | strong onion flavour, increased kokumi taste (complexity and mouthfulness), more impact, punch, long lasting taste sensation |

### Example 3

### Onion flavour compounds in tomato soup

Cys-O-C₂H₅ and γ-Glu-CyS-O-C₂H₅ are added to tomato soup (Unox, Unilever Bestfoods, Germany, pH 4,5), in the concentrations indicated below.

| **Tomato soup samples** | **Test results** |
|---|---|
| Reference without additives | - |
| Cys-O-C₂H₅ (1 mmol/L) | Preferred, onion like flavour, slightly meaty |
| Cys-O-C₂H₅ (5 mmol/L) | Preferred, onion like flavour, meaty, stronger than the effect found for Cys-O-C₂H₅ (1 mmol/L) |
| γ-Glu-Cys-O-C₂H₅ (1 mmol/L) | Preferred, onion like flavour, meaty, roasty, slightly increased complexity and mouthfulness, more impact, punch, long lasting taste sensation |
| γ-Glu-Cys-O-C₂H₅ (5 mmol/L) | Preferred, strong onion like flavour, meaty, roasty, more pronounced when compared to Cys-O-C₂H₅ (5 mmol/L), increased complexity and mouthfulness, more impact, punch, long lasting taste sensation |

All panellists find samples 2-5 different from the reference sample and preferred. The samples Cys-O-C₂H₅ (1 mmol/L) and Cys-O-C₂H₅ (5 mmol/L) both are described to possess a onion like and slightly meaty flavour, γ-Glu-Cys-O-C₂H₅ (1 mmol/L) and γ-Glu-Cys-O-C₂H₅ (5 mmol/L) are additionally described as more roasty. Samples containing γ-Glu-Cys-O-C₂H₅ possess also a kokumi taste, panellists characterized the samples having a more complex, long lasting taste sensation and an increased mouthfulness.

### Example 4

### Onion flavour compounds in mushroom cream soup

Cys-O-C₂H₅ and γ-Glu-Cys-O-C₂H₅ are added to mushroom cream soup (Unox, Unilever Bestfoods, Germany), pH 6.0 in a concentration of 1 mmol/L samples are evaluated directly after homogenisation.

| **samples** | **Test results** |
|---|---|
| Reference without additives | - |
| Cys-O-C₂H₅ | Preferred, onion like flavour |
| γ-Glu-Cys-O-C₂H₅ | Preferred, strong onion like flavour, meaty, roasty, more pronounced when compared to Cys-O-C₂H₅, increased complexity and mouthfulness, more impact, punch, long lasting taste sensation |

Cys-O-C₂H₅ is indicated by 7 out of 8 panelists to have a onion like flavour. γ-Glu-Cys-O-C₂H₅ is described similar to Cys-O-C₂H₅, but the observed effect is higher and the sample elicits a more complex, long lasting taste.

### Example 5

### Onion flavour compounds in barbecue sauce

Onion flavour compounds as indicated in the table below are added to barbecue sauce (Kraft Foods, Germany), pH 3.3.

| **samples** | **Test results** |
|---|---|
| Reference without additive | - |
| Cys-O-C₂H₅ (5 mmol/L) | Preferred, onion like flavour, meaty |
| γ-Glu-Cys-O-C₂H₅ (5 mmol/L) | Preferred, strong onion like flavour, meaty, roasty, more pronounced when compared to Cys-O-C₂H₅ (5 mmol/L), increased complexity and mouthfulness, more impact, punch, long lasting taste sensation |

Both samples with additive are significantly preferred and described to have onion like and slightly meaty flavour, samples containing γ-Glu-Cys-O-C₂H₅ are additionally described as more roasty. This sample possesses also a kokumi taste, panellists characterized the sample having a more complex, long lasting taste sensation and an increased mouthfulness.

## Claims

1. Use as a flavour of at least one compound according to the formula (I), or a salt thereof, 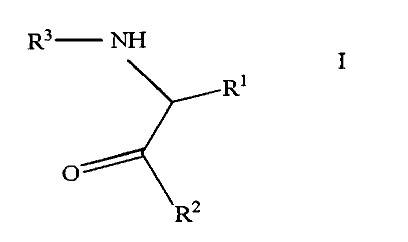 wherein the residues R¹, R² and R³ are selected as follows:
R¹ is a residue selected from the group consisting of - CH₂SX , - CH₂CH₂SX, and -CH₂CH₂CH₂SX, with X being a residue selected from H and -CH₃;
R² is a residue selected from -C₁-C₅ linear or branched alkoxy residue including -O-CH₃, -O-CH₂CH₃, -O-CH₂CH₂CH₃, -O-CH₂CH₂ CH₂CH₃,-O-CH₂CH₂ CH₂ CH₂ CH₃,-O-CH(CH₃)CH₃, -O-CH₂CH(CH₃)₂, -O-CH₂CH(CH₃)(CH₂CH₃), and -O-CH₂CH₂CH(CH₃)₂: and
R³ is a residue selected from the group of H, and an aminoacid residue linked via a peptide bond selected from the group consisting of γ-Glu (-CO-CH₂-CH₂-CH(NH₂)-COOH), ß-Asp (-CO-CH₂-CH(NH₂)-COOH), α-Glu (-CO-CH(NH₂)-CH₂-CH₂-COOH), α-Asp (-CO-CH(NH₂)-CH₂-COOH), β-Ala (-CO- CH₂- CH₂-NH₂), α-Ala, α-Val, α-Leu, α-lie, α-Met, α-Pro, α-Phe, α-Trp, α-Ser, α-Thr, α-Asn, α-Gin, α-Tyr, α-Cys, α-Lys, α-Arg, α-His, α-Asp, a gamma amino butyric acid (GABA), and an uncommon amino acid including 4-hydroxyprolin, ε-N,N,N-trimethylysine, 3-methylhistindine, 5-hydroxylysine, O-phosphoserine, gamma-carboxyglutsmate, ε-N-acetylysine, ω-N-methylarginine, N-acetylserine, N,N,N-trimethylalanine, N-formylmethionine.

2. Use according to claim 1 wherein R³ is a residue selected from the group consisting of H, γ-Glu, β-Asp, α-Glu, α-Asp.

3. Use according to claim 1 wherein R³ is a residue selected from the group consisting of a residue of γ-Glu, ß-Asp.

4. Use according to claim 1 wherein X is H.

5. Use according to claim 4 wherein R1 is CH₂SH.

6. Use according to claim 1 wherein X is CH₃.

7. Use according to claim 6 wherein R1 is CH₂ CH₂SCH₃.

8. Use according to claim 1 wherein R² is a residue selected from -C₁-C₅ linear or branched alkoxy residue selected from the group consisting of -O-CH₃, -O-CH2-CH₃, -O-CH₂CH₂CH₃, -O-CH₂CH₂ CH₂CH₃,-O-CH2_{C}H2 CH₂ CH₂ CH_{3,} - O-CH(CH₃)CH₃, -O-CH₂CH(CH₃)₂, -O-CH₂CH(CH₃)(CH₂CH₃), and -O-CH₂CH₂CH(CH₃)₂.

9. Use according to claim 1 wherein R² is a C₁-C₄ linear or branched alkoxy residue including -O-CH₃, -O-CH₂-CH₃, - O-CH₂CH₂CH₃, -O-CH(CH₃)CH₃, and -O-CH₂CH(CH₃)₂.

10. Use according to claim 1 wherein the compound is selected from the group consisting of Cys-O-CH₃, Cys-O-C₂H₅, Cys-O-C₃H₇. Cys-O-C₃H₇, Met-O-CH_{3,} Met-O-C₂H₅, γ-Glu-Cys-O-CH₃" γ-Glu-Cys-O-C₂H₅.

11. A compound as defined in formula 1 of claim 1, with the proviso that the compounds are not selected from the group consisting of compounds wherein R¹=CH₂SH, R² =OCH₃, and R³ = H, Cys or y-Glu; R¹ =CH₂SH, R²= OCH₂CH₃, and R³ = H, Cys, Ala, Gly or γ-Glu; R¹ =CH₂SH, R²= OCH₂CH₂CH₃, and R³ = H ; R¹ =CH₂SH, R²= OCH₂CH₂CH(CH₃)₂, and R³ = H ; R¹=CH₂SH, R²= OCH₂CH(CH₃)(CH₂CH₃), and R³ = H ; R¹ =CH₂SH, R²= OCH₂CH(CH₃)₂, and R³ = H ; R¹=CH₂SH, R²= OCH(CH₃)CH₃, and R³ = H ; R¹ =CH₂SCH₃, R²= OCH₃, and R³ = H, Gly, Phe, or α-Asp ; R¹ =CH₂SCH₃, R²= OCH₂CH₃, and R³ = H, or Gly ; R¹ =CH₂CH₂SH, R²= OCH₃, and R³ = H; R¹ =CH₂CH₂SH, R² OCH₂CH₃, and R³ = H; R¹ =CH₂CH₂SH, R² = OCH₂CH₂CH₃, and R³ = H; R¹=CH₂CH₂SH, R² = OCH(CH₃)CH₃, and R³ = H; R¹ =CH₂CH₂SCH₃, R²= OCH₃, and R³ = H, Ser, Gly, Phe, Leu, Met, ora-Asp; R¹ =CH₂CH₂SCH₃, R²= CH₂CH₃, and R³ = H, Met, Phe, or β-Ala; R¹=CH₂CH₂SCH₃, R² = OCH₂CH₂CH₃, and R³ = H; R¹ =CH₂CH₂SCH₃, R² = OCH₂CH(CH₃)₂, and R³ = H; R¹=CH₂CH₂SCH₃, R² OCH(CH₃)CH₃, and R³ = H; R¹ =CH₂CH₂SCH₃, R²= OCH₂CH₂CH(CH₃)₂, and R³ = H; R¹=CH₂CH₂CH₂SH, R²= OCH, and R³ = H; and R¹ =CH₂CH₂ CH₂SCH₃, R²= OCH₃, and R³ = H.

12. A flavour composition for providing an onion taste to foods or beverages comprising one or more compounds of formula 1 as defined in any one of claims 1 to 11, or a mixture thereof wherein the flavour composition comprises at least one excipient selected from the group consisting of a flavouring agent and a flavour enhancer.

13. A consumable containing one or more compounds of formula (I) as defined in any one of claims 1 to 11, or mixtures thereof, in a concentration of 1 to 25.000 ppm (weight/weight).

14. A method for imparting a onion flavour to a consumable, comprising the addition of one or more compounds as defined in any one of claims 1 to 11 to a consumable.

15. A method according to claim 14 for imparting a onion flavour and a kokumi taste to a consumable, comprising the addition of a compound of formula 1 as defined in claim 1 wherein R³ is γ-Glu to a consumable.

16. Method according to claim 14 or 15 wherein the compound is added in form of an unpurified reaction mixture in which it was formed, in form of an extract from a plant or fermentation, in form of a crude extract of the above-mentioned, or in purified form.

## Patentansprüche

1. Verwendung von wenigstens einer Verbindung gemäß Formel (I) oder eines Salzes davon als Aroma, 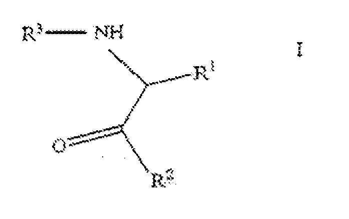 wobei die Reste R¹, R² und R³ folgendermaßen ausgewählt sind:
R¹ ist ein Rest, ausgewählt aus der Gruppe, bestehend aus -CH₂SX, -CH₂CH₂SX und -CH₂CH₂CH₂SX, wobei X ein Rest ist, ausgewählt aus H und -CH₃;
R² ist ein Rest, ausgewählt aus linearen oder verzweigten -C₁-C₅-Alkoxyresten, einschließlich -O-CH₃, -O-CH₂-CH₃, -O-CH₂CH₂CH₃, -O-CH₂CH₂CH₂CH₃, -O-CH₂CH₂CH₂CH₂CH₃, -O-CH (CH₃) CH₃, -O-CH₂CH (CH₃) ₂, -O-CH₂CH (CH₃) (CH₂CH₃) und -O-CH₂CH₂CH (CH₃)₂; und
R³ ist ein Rest, ausgewählt aus der Gruppe von H und einem über eine Peptidbindung verknüpften Aminosäurerest, ausgewählt aus der Gruppe, bestehend aus γ-Glu (-CO-CH₂-CH₂-CH(NH₂)-COOH), β-Asp (-CO-CH₂-CH(NH₂)-COOH), α-Glu (-CO-CH(NH₂)-CH₂-CH₂-COOH), α-Asp (-CO-CH(NH₂)-CH₂-COOH), β-Ala (-CO-CH₂-CH₂-NH₂), α-Ala, α-Val, α-Leu, α-Ile, α-Met, α-Pro, α-Phe, α-Trp, α-Ser, α-Thr, α-Asn, α-Gln, α-Tyr, α-Cys, α-Lys, α-Arg, α-His, α-Asp, gamma-Aminobuttersäure (GABA) und einer ungewöhnlichen Aminosäure, einschließlich 4-Hydroxyprolin, ε-N,N,N-Trimethyllysin, 3-Methylhistidin, 5-Hydroxylysin, O-Phosphoserin, gamma-Carboxyglutamat, ε-N-Acetyllysin, ω-N-Methylarginin, N-Acetylserin, N,N,N-Trimethylalanin, N-Formylmethionin.

2. Verwendung gemäß Anspruch 1, wobei R³ ein Rest ist, ausgewählt aus der Gruppe, bestehend aus H, y-Glu, β-Asp, α-Glu, α-Asp.

3. Verwendung gemäß Anspruch 1, wobei R³ ein Rest ist, ausgewählt aus der Gruppe, bestehend aus einem Rest von γ-Glu, β-Asp.

4. Verwendung gemäß Anspruch 1, wobei X H ist.

5. Verwendung gemäß Anspruch 4, wobei R¹ CH₂SH ist.

6. Verwendung gemäß Anspruch 1, wobei X CH₃ ist.

7. Verwendung gemäß Anspruch 6, wobei R¹ CH₂CH₂SCH₃ ist.

8. Verwendung gemäß Anspruch 1, wobei R² ein Rest ist, ausgewählt aus linearen oder verzweigten -C₁-C₅-Alkoxyresten, ausgewählt aus der Gruppe, bestehend aus -O-CH₃, -O-CH₂-CH₃, -O-CH₂CH₂CH₃, -O-CH₂CH₂CH₂CH₃, -O-CH_{2C}H_{2C}H₂CH₂CH₃, -O-CH(CH₃)CH₃, -O-CH₂CH(CH₃)₂, -O-CH₂CH(CH₃) (CH₂CH₃) und -O-CH₂CH₂CH (CH₃)₂.

9. Verwendung gemäß Anspruch 1, wobei R² ein linearer oder verzweigter C₁-C₄-Alkoxyrest ist, einschließlich -O-CH₃, -O-CH₂-CH₃, -O-CH₂CH₂CH₃, -0-CH(CH₃)CH₃ und -O-CH₂CH (CH₃)₂.

10. Verwendung gemäß Anspruch 1, wobei die Verbindung ausgewählt ist aus der Gruppe, bestehend aus Cys-O-CH₃, Cys-O-CH₂H₅, Cys-O-C₃H₇, Met-O-CH₃, Met-O-C₂H₅, γ-Glu-Cys-O-CH₃, γ-Glu-Cys-O-C₂H₅.

11. Verbindung wie in Formel I von Anspruch 1 definiert, mit der Maßgabe, dass die Verbindungen nicht ausgewählt sind aus der Gruppe, bestehend aus Verbindungen, wobei R¹=CH₂SH, R²=OCH₃ und R³=H, Cys oder γ-Glu; R¹=CH₂SH, R²=OCH₂CH₃ und R³=H, Cys, Ala, Gly oder γ-Glu; R¹=CH₂SH, R²=OCH₂CH₂CH₃ und R³=H; R¹=CH₂SH, R²=OCH₂CH₂CH(CH₃)₂ und R³=H; R¹=CH₂SH, R²=OCH₂CH (CH₃) (CH₂CH₃) und R³=H; R¹=CH₂SH, R²=OCH₂CH (CH₃) und R³=H; R¹=CH₂SH, R²=OCH(CH₃)CH₃ und R³=H; R¹=CH₂SCH₃, R²=OCH₃ und R³=H, Gly, Phe oder α-Asp; R¹=CH₂SCH₃, R²=OCH₂CH₃ und R³=H oder Gly; R¹=CH₂CH₂SH, R²=OCH₃ und R³=H; R¹=CH₂CH₂SH, R²=OCH₂CH₃ und R³=H; R¹=CH₂CH₂SH, R²=OCH₂CH₂CH₃ und R³=H; R¹=CH₂CH₂SH, R²=OCH(CH₃)CH₃ und R³=H; R¹=CH₂CH₂SCH₃, R₂=OCH₃ und R³=H, Ser, Gly, Phe, Leu, Met oder α-Asp; R¹=CH₂CH₂SCH₃, R²=OCH₂CH₃ und R³=H, Met, Phe oder β-Ala; R¹=CH₂CH₂SCH₃, R²=OCH₂CH₂CH₃ und R³=H; R¹=CH₂CH₂SCH₃, R²=OCH₂CH (CH₃)₂ und R³=H; R¹=CH₂CH₂SCH₃, R²=OCH (CH₃)CH₃ und R³=H; R¹=CH₂CH₂SCH₃, R²=OCH₂CH₂CH (CH₃)₂ und R³=H; R¹=CH₂CH₂CH₂SH, R²=OCH₃ und R³=H; und R¹=CH₂CH₂CH₂SCH₃, R²=OCH₃ und R³=H.

12. Aromazusammensetzung zum Verleihen eines Zwiebelgeschmacks an Nahrungsmittel oder Getränke, umfassend eine oder mehrere Verbindungen der Formel I, wie definiert in einem der Ansprüche 1 bis 11, oder ein Gemisch davon, wobei die Aromazusammensetzung wenigstens einen Exzipienten umfasst, ausgewählt aus der Gruppe, bestehend aus einem Aromamittel und einem Aromaverstärker.

13. Verbrauchsgut, umfassend eine oder mehrere Verbindungen der Formel (I), wie definiert in einem der Ansprüche 1 bis 11, oder Gemische davon in einer Konzentration von 1 bis 25.000 ppm (Gew./Gew.).

14. Verfahren zum Verleihen eines Zwiebelaromas an ein Verbrauchsgut, umfassend das Zugeben von einer oder mehreren Verbindungen, wie definiert in einem der Ansprüche 1 bis 11, zu einem Verbrauchsgut.

15. Verfahren gemäß Anspruch 14 zum Verleihen eines Zwiebelaromas und eines Kokumigeschmacks an ein Verbrauchsgut, umfassend das Zugeben einer Verbindung der Formel I, wie definiert in Anspruch 1, wobei R³ γ-Glu ist, zu einem Verbrauchsgut.

16. Verfahren gemäß Anspruch 14 oder 15, wobei die Verbindung in der Form eines nichtgereinigten Reaktionsgemischs, in dem es gebildet wurde, in der Form eines Extrakts aus einer Pflanze oder einer Fermentation, in der Form eines Rohextrakts der vorstehend genannten oder in gereinigter Form zugegeben wird.

## Revendications

1. Utilisation en tant qu'arôme d'au moins un composé de formule (I), ou un sel de celui-ci, 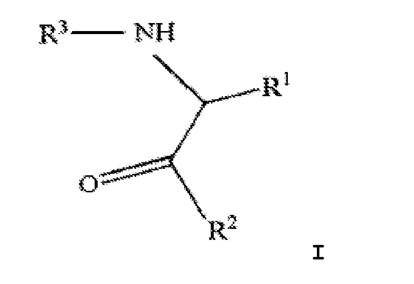 dans lequel les résidus R¹, R² et R³ sont choisis comme suit :
R¹ est un résidu choisi dans le groupe constitué de - CH₂SX, -CH₂CH₂SX, et -CH₂CH₂CH₂SX, X étant un résidu choisi parmi H et -CH₃;
R² est un résidu choisi parmi un résidu alcoxy linéaire ou ramifié en -C₁-C₅ comprenant -O-CH₃, -O-CH₂-CH₃, -0-CH₂CH₂CH₃, -O-CH₂CH₂CH₂CH₃, -O-CH₂CH₂CH₂CH₂CH₃, -O-CH(CH₃)CH₃, -O-CH₂CH(CH₃)₂, -O-CH₂CH(CH₃) (CH₂CH₃), et -0-CH₂CH₂CH(CH₃)₂; et
R³ est un résidu choisi dans le groupe de H et un résidu d'acide aminé lié par l'intermédiaire d'une liaison peptidique choisi dans le groupe constitué de γ-Glu(-CO-CH₂-CH₂-CH(NH2)-COOH), β-Asp(-CO-CH₂-CH(NH₂)-COOH), α-Glu (-CO-CH (NH₂) -CH₂-CH₂-COOH), α-Asp (-CO-CH (NH₂) -CH₂-COOH), β-Ala(-CO-CH₂-CH₂-NH₂), α-Ala, α-Val, α-Leu, α-Ile, α-Met, α-Pro, α-Phe, α-Trp, α-Ser, α-Thr, α-Asn, α-Gln, α-Tyr, α-Cys, α-Lys, α-Arg, α-His, α-Asp, un acide gamma-aminobutyrique (GABA), et un acide aminé rare comprenant la 4-hydroxyproline, la ε-N,N,N-triméthyl-lysine, la 3-méthylhistidine, la 5-hydroxylysine, la O-phosphosérine, le gamma-carboxyglutamate, la ε-N-acétyl-lysine, la ω-N-méthylarginine, la N-acétylsérine, la N,N,N-triméthylalanine, la N-formylméthionine.

2. Utilisation selon la revendication 1 dans laquelle R³ est un résidu choisi dans le groupe constitué de H, γ-Glu, β-Asp, α-Glu, α-Asp.

3. Utilisation selon la revendication 1 dans laquelle R³ est un résidu choisi dans le groupe constitué d'un résidu de γ-Glu, β-Asp.

4. Utilisation selon la revendication 1 dans laquelle X est H.

5. Utilisation selon la revendication 4 dans laquelle R¹ est CH₂SH.

6. Utilisation selon la revendication 1 dans laquelle X est CH₃.

7. Utilisation selon la revendication 6 dans laquelle R¹ est CH₂CH₂SCH₃.

8. Utilisation selon la revendication 1 dans laquelle R² est un résidu choisi parmi un résidu alcoxy linéaire ou ramifié en -C₁-C₅ choisi dans le groupe constitué de -O-CH₃, -O-CH₂-CH₃, -O-CH₂CH₂CH₃, -0-CH₂CH₂CH₂CH₃, -O-CH₂CH₂CH₂CH₂CH₃, -O-CH(CH₃)CH₃, -O-CH₂CH(CH₃)₂, -O-CH₂CH(CH₃) (CH₂CH₃), et -O-CH₂CH₂CH(CH₃)₂.

9. Utilisation selon la revendication 1 dans laquelle R² est un résidu alcoxy linéaire ou ramifié en -C₁-C₄ comprenant -O-CH₃, -O-CH₂-CH₃, -O-CH₂CH₂CH₃, -0-CH(CH₃)CH₃, -O-CH₂CH (CH₃)₂.

10. Utilisation selon la revendication 1 dans laquelle le composé est choisi dans le groupe constitué de Cys-O-CH₃, Cys-O-C₂H₅, Cys-O-C₃H₇, Met-O-CH₃, Met-OC₂H₅, γ-Glu-Cys-O-CH₃, γ-Glu-Cys-O-C₂H₅.

11. Composé tel que défini dans la formule I de la revendication 1, à condition que les composés ne soient pas choisis dans le groupe constitué de composés dans lesquels R¹ = CH₂SH, R² = OCH₃, et R³ = H, Cys ou γ-Glu ; R¹ = CH₂SH, R² = OCH₂CH₃, et R³ = H, Cys, Ala, Gly ou γ-Glu ; R¹ ₌ CH₂SH, R² = OCH₂CH₂CH₃, et R³ = H ; R¹ = CH₂SH, R² = OCH₂CH₂CH (CH₃)₂, et R³ = H ; R¹ = CH₂SH, R² = OCH₂CH (CH₃) (CH₂CH₃), et R³ = H ; R¹ = CH₂SH, R² = OCH₂CH(CH₃)₂, et R³ = H ; R¹ = CH₂SH, R² = OCH(CH₃)CH₃, et R³ = H ; R¹ = CH₂SCH₃, R² = OCH₃, et R³ = H, Gly, Phe, ou α-Asp ; R¹ = CH₂SCH₃, R² = OCH₂CH₃, et R³ = H, ou Gly ; R¹ = CH₂CH₂SH, R² = OCH₃, et R³ = H ; R¹ = CH₂CH₂SH, R² = OCH₂CH₃, et R³ = H ; R¹ = CH₂CH₂SH, R² = OCH₂CH₂CH₃, et R³ = H ; R¹ = CH₂CH₂SH, R² = OCH(CH₃)CH₃, et R³ = H ; R¹ = CH₂CH₂SCH₃, R² = OCH₃, et R³ = H, Ser, Gly, Phe, Leu, Met, ou α-Asp ; R¹ = CH₂CH₂SCH₃, R² = OCH₂CH₃, et R³ =H, Met, Phe, ou β-Ala ; R¹ = CH₂CH₂SCH₃, R² = OCH₂CH₂CH₃, et R³ = H ; R¹ = CH₂CH₂SCH₃, R2 = OCH₂CH (CH₃)₂, et R³ = H ; R¹ = CH₂CH₂SCH₃, R² =OCH(CH₃)CH₃, et R³ =H ; R¹ = CH₂CH₂SCH₃, R² = OCH₂CH₂CH (CH₃)₂, et R³ = H ; R¹ = CH₂CH₂CH₂SH, R² = OCH₃, et R³ = H ; et R¹ =CH₂CH₂ CH₂SCH₃, R² = OCH₃, et R³ =H.

12. Composition d'arôme pour conférer un goût d'oignon à des aliments ou des boissons comprenant un ou plusieurs composés de formule I tels que définis dans l'une quelconque des revendications 1 à 11, ou un mélange de ceux-ci, où la composition d'arôme comprend au moins un excipient choisi dans le groupe constitué d'un agent aromatisant et un rehausseur d'arôme.

13. Article consommable contenant un ou plusieurs composés de formule (I) tels que définis dans l'une quelconque des revendications 1 à 11, ou des mélanges de ceux-ci, à une concentration de 1 à 25 000 ppm (poids/poids).

14. Procédé pour conférer un goût d'oignon à un article consommable, comprenant l'ajout d'un ou plusieurs composés tels que définis dans l'une quelconque des revendications 1 à 11 à un article consommable.

15. Procédé selon la revendication 14 pour conférer un arôme d'oignon et un goût « kokumi » à un article consommable, comprenant l'ajout d'un composé de formule I tel que défini dans la revendication 1 dans lequel R³ est γ-Glu à un article consommable.

16. Procédé selon la revendication 14 ou 15 dans lequel le composé est ajouté sous forme de mélange de réaction non purifié dans lequel il a été formé, sous la forme d'un extrait de plante ou de fermentation, sous la forme d'un extrait brut de ceux-ci, ou sous forme purifiée.
